# EUROPÄISCHE PATENTANMELDUNG

(11) **EP 2 842 794 A2**
(43) Veröffentlichungstag der Anmeldung: **04.03.2015**
(21) Anmeldenummer: 14001058.8
(22) Anmeldetag: 21.03.2014
(51) Int. Cl.: B60L 11/18

(54) **Fahrzeug mit Plug-in-Ladefunktion**

(30) Priorität: 28.08.2013 DE 102013014361
(71) Anmelder: MAN Truck & Bus AG, 80995 München (DE)
(72) Erfinder: Schleufe, Stefan, 81245 München (DE)

(57) **Zusammenfassung**

Die Erfindung betrifft ein Fahrzeug (2), mit einer Speichereinrichtung zum Speichern elektrischer Energie, einer Ladeeinrichtung (3), mittels der die Speichereinrichtung durch eine fahrzeugexterne Ladequelle (1) aufladbar ist, und zumindest eine fahrzeugeigene Einrichtung (4, 5), die zur Signalerzeugung geeignet ist. Das Fahrzeug (2) zeichnet sich dadurch aus, dass die zumindest eine Einrichtung (4, 5) aktiviert wird und ein Signal erzeugt, wenn eine Ladeverbindung zwischen der fahrzeugexternen Ladequelle (1) und der Speichereinrichtung hergestellt und/oder unterbrochen wird.

## Beschreibung

Die Erfindung betrifft ein Fahrzeug mit einer Plug-in-Aufladefunktion für eine Speichereinrichtung zum Speichern elektrischer Energie und insbesondere ein sogenanntes Plug-in-Fahrzeug (z. B. Plug-In-Hybrid-Fahrzeug oder Plug-in-Elektro-Fahrzeug).

Plug-in-Fahrzeuge verfügen über eine Speichereinrichtung zum Speichern elektrischer Energie für den Antrieb eines Antriebsmotors des Fahrzeugs und ein Ladekabel, über das die Speichereinrichtung durch eine fahrzeugexterne Ladequelle, z. B. das landseitige Stromnetz aufgeladen werden kann. Der Ladevorgang erfolgt üblicherweise wie folgt: Der Fahrer stellt das Fahrzeug ab (Zündung aus), verlässt das Fahrzeug und schließt es ab. Daraufhin schließt er das Ladekabel an die fahrzeugexterne Ladequelle an. Nach erfolgtem Ladevorgang kann der Fahrer die Ladeverbindung trennen, in das Fahrzeug einsteigen und losfahren. Nachteilhaft ist, dass der Fahrer keine Bestätigung erhält, dass die Ladeverbindung tatsächlich hergestellt oder tatsächlich unterbrochen wurde.

Eine Aufgabe der Erfindung ist es, ein verbessertes Fahrzeug mit Plug-in-Ladefunktion zu schaffen.

Diese Aufgabe kann mit den Merkmalen des Hauptanspruchs gelöst werden. Vorteilhafte Weiterbildungen können den Unteransprüchen und der folgenden Beschreibung entnommen werden.

Die Erfindung schafft ein Fahrzeug mit einer Speichereinrichtung zum Speichern elektrischer Energie, einer Ladeeinrichtung, mittels der die Speichereinrichtung durch eine fahrzeugexterne Ladequelle (z. B. eine Ladesäule) aufladbar ist, und zumindest einer fahrzeugeigenen Einrichtung, die zur zweckmäßig optischen bzw. visuellen und/oder akustischen Signalerzeugung geeignet ist.

Das Fahrzeug zeichnet sich insbesondere dadurch aus, dass die zumindest eine Einrichtung aktiviert wird und ein Signal erzeugt, wenn eine Ladeverbindung zwischen der fahrzeugexternen Ladequelle und der Speichereinrichtung hergestellt und/oder unterbrochen (z. B. abgebrochen, getrennt, gelöst, etc.) wird. Im Rahmen der Erfindung kann somit auf zumindest eine fahrzeugeigene Einrichtung und somit schon vorhandene Fahrzeuginfrastruktur zurückgegriffen werden, um einem Fahrer oder Nutzer eine Rückmeldung darüber zu geben, dass die Ladeverbindung zwischen der fahrzeugexternen Ladequelle und der Speichereinrichtung hergestellt und/oder unterbrochen wird.

Das Merkmal, dass die Ladeverbindung hergestellt und/oder unterbrochen wird, ist allgemein zu verstehen und umfasst insbesondere Ausführungsformen, in denen die Ladeinrichtung an die fahrzeugexterne Ladequelle angeschlossen (z. B. angesteckt) wird und/oder in denen die Ladeeinrichtung von der fahrzeugexternen Ladequelle getrennt (z. B. abgezogen) wird. Es ist z. B. möglich, dass die Speichereinrichtung zum Zeitpunkt der "Trennung" oder des "Abbruchs" bereits voll aufgeladen ist oder noch nicht voll aufgeladen ist und sich somit noch in einem Aufladevorgang befindet.

Es ist möglich, dass die zumindest eine Einrichtung eine Blinkereinrichtung zur optischen bzw. visuellen Fahrtrichtungsanzeige und/oder eine Hupe zur akustischen Signalerzeugung umfasst. Die Einrichtung kann im Rahmen der Erfindung somit eine oder mehrere Einrichtungen zur Signalerzeugung umfassen. Im Rahmen der Erfindung können auch andere Außenleuchten zur Signalerzeugung aktiviert werden, z. B. Bremsleuchten, Tagfahrlicht, Abblendlicht, Rückleuchten, Rückfahrleuchten, Nebelscheinwerfer, etc..

Die Signalerzeugung durch die zumindest eine Einrichtung kann z. B. für einen vorbestimmten Zeitraum nach deren Aktivierung erfolgen. Der vorbestimmte Zeitraum kann z. B. weniger als 20, 10, 5 oder sogar weniger als 2 Sekunden betragen.

Die Signalerzeugung durch die zumindest eine Einrichtung kann z. B. eine intermittierende Blink-Sequenz und/oder eine intermittierende Hup-Sequenz umfassen.

Es ist allerdings ebenso möglich, dass die Signalerzeugung durch die zumindest eine Einrichtung ein Dauerleuchten der Blinkereinrichtung und/oder einen Dauerhupton der Hupe umfasst.

Die Ladeeinrichtung ist vorzugsweise ein Ladekabel mit Anschlussstecker oder Anschlussbuchse zum Anschließen an die fahrzeugexterne Ladequelle. Die fahrzeugexterne Ladequelle ist vorzugsweise eine an das allgemeine Stromnetz angeschlossene Ladesäule.

Die Speichereinrichtung dient vorzugsweise zum Speichern elektrischer Energie für den Antrieb eines Antriebsmotors des Fahrzeugs, kann alternativ oder ergänzend allerdings auch elektrische Energie für andere Fahrzeugkomponenten speichern.

Das Fahrzeug kann ein Personenkraftwagen, ein Nutzfahrzeug, z. B. ein Omnibus oder ein Lastkraftwagen, oder ein elektrisch angetriebenes Zweirad, z. B. ein Elektro-Roller, Elektrofahrrad oder Pedelec, etc. sein.

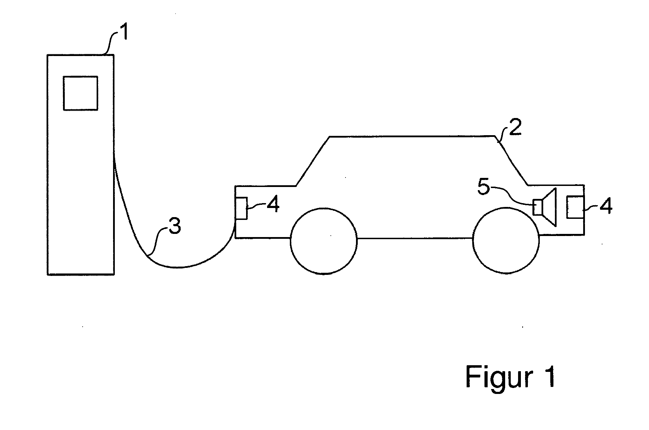

Die zuvor beschriebenen Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit der beigefügten Figur 1.

Figur 1 zeigt schematisch ein Fahrzeug gemäß einer Ausführungsform der Erfindung.

Figur 1 zeigt ein Fahrzeug 2 mit Plug-in-Aufladefunktion, insbesondere ein sogenanntes Plug-in-Fahrzeug, z. B. ein Plug-in-Hybrid-Fahrzeug oder ein reines Elektrofahrzeug mit Plug-in-Aufladefunktion. Das Fahrzeug 2 umfasst eine Speichereinrichtung zum Speichern elektrischer Energie. Die Speichereinrichtung dient zum Speichern elektrischer Energie für den Antrieb eines Antriebsmotors des Fahrzeugs, kann alternativ oder ergänzend allerdings auch elektrische Energie für andere Fahrzeugkomponenten speichern.

Das Fahrzeug 2 umfasst eine als Ladekabel ausgeführte Ladeeinrichtung 3, mittels der die Speichereinrichtung durch eine fahrzeugexterne Ladequelle 1, insbesondere eine Ladesäule 1 aufgeladen werden kann. Die Ladequelle 1 kann z. B. an das allgemeine Stromnetz angeschlossen sein.

Das Fahrzeug 2 umfasst ferner fahrzeugeigene Einrichtungen 4, 5 zur Signalerzeugung. Die fahrzeugeigenen Einrichtungen umfassen eine Blinkereinrichtung 4 zur optischen bzw. visuellen Fahrtrichtungsanzeige und eine Hupe 5 zur Erzeugung eines akustischen Huptons. Die Blinkereinrichtung 4 und die Hupe 5 können vorzugsweise herkömmlich ausgeführt sein.

Das Fahrzeug 2 ist so ausgeführt und eingerichtet, dass die Blinkereinrichtung 4 und/oder die Hupe 5 aktiviert wird und ein Signal erzeugt, wenn eine Ladeverbindung zwischen der fahrzeugexternen Ladequelle 1 und der Speichereinrichtung hergestellt und/oder unterbrochen wird. Die Blinkereinrichtung 4 und/oder die Hupe 5 werden z. B. aktiviert, wenn die Ladeinrichtung 3 an die fahrzeugexterne Ladequelle 1 angeschlossen wird und wenn die Ladeeinrichtung 3 von der fahrzeugexternen Ladequelle 1 getrennt wird.

Somit kann bereits vorhandene Fahrzeuginfrastruktur genutzt werden, um dem Nutzer zu bestätigen, dass die Ladeverbindung zwischen der fahrzeugexternen Ladequelle 1 und der Speichereinrichtung hergestellt und/oder unterbrochen wurde.

Das durch die Blinkereinrichtung 4 erzeugte Signal kann ein Dauerleuchten oder eine intermittierende Blink-Sequenz sein, z. B. ein kurzes Aufblinken. Das durch die Hupe 5 erzeugte Signal kann ein Hupton oder eine intermittierende Hup-Sequenz sein, mit zweckmäßig moderater Lautstärke. Die Signalerzeugung kann sich über einen vorbestimmten Zeitraum nach deren Aktivierung erstrecken und vorzugsweise weniger als 5 Sekunden andauern.

Das in der Figur 1 gezeigte Fahrzeug 2 ist ein Personenkraftwagen, kann aber auch ein Nutzfahrzeug, z. B. ein Omnibus oder ein Lastkragen, oder ein elektrisch angetriebenes Zweirad sein.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche, unabhängig von den in Bezug genommenen Merkmalen und Ansprüchen.

### Bezugszeichenliste

- 1: Fahrzeugexterne Ladequelle
- 2: Fahrzeug mit elektrischem Energiespeicher
- 3: Ladeeinrichtung, insbesondere Ladekabel
- 4: Fahrtrichtungsanzeige (Blinker)
- 5: Hupe

## Patentansprüche

1. Fahrzeug (2), mit
- einer Speichereinrichtung zum Speichern elektrischer Energie, vorzugsweise für den Antrieb eines Antriebsmotors des Fahrzeugs,
- einer Ladeeinrichtung (3), mittels der die Speichereinrichtung durch eine fahrzeugexterne Ladequelle (1) aufladbar ist, und
- zumindest einer fahrzeugeigenen Einrichtung (4, 5), die zur Signalerzeugung geeignet ist, **dadurch gekennzeichnet, dass**
- die zumindest eine Einrichtung (4, 5) aktiviert wird und ein Signal erzeugt, wenn eine Ladeverbindung zwischen der fahrzeugexternen Ladequelle (1) und der Speichereinrichtung hergestellt und/oder unterbrochen wird.

2. Fahrzeug (2) nach Anspruch 1, **dadurch gekennzeichnet, dass** die zumindest eine Einrichtung (4, 5) eine Blinkereinrichtung (4) zur optischen oder visuellen Fahrtrichtungsanzeige und/oder eine Hupe (5) zur akustischen Signalerzeugung umfasst.

3. Fahrzeug (2) nach Anspruch 1 oder 2, **dadurch gekennzeichnet, dass** die Signalerzeugung durch die zumindest eine Einrichtung (4, 5) für einen vorbestimmten Zeitraum nach deren Aktivierung erfolgt.

4. Fahrzeug (2) nach einem der vorhergehenden Ansprüche, **dadurch gekennzeichnet, dass** der vorbestimmte Zeitraum weniger als 20, 10, 5 oder 2 Sekunden beträgt.

5. Fahrzeug (2) nach einem der vorhergehenden Ansprüche, **dadurch gekennzeichnet, dass** die Signalerzeugung durch die zumindest eine Einrichtung (4, 5) eine Blink-Sequenz und/oder Hup-Sequenz umfasst.

6. Fahrzeug (2) nach einem der Ansprüche 1 bis 4, **dadurch gekennzeichnet, dass** die Signalerzeugung durch die zumindest eine Einrichtung (4, 5) ein Dauerleuchten der Blinkereinrichtung (4) und/oder einen Dauerhupton der Hupe (5) umfasst.

7. Fahrzeug (2) nach einem der vorhergehenden Ansprüche, **dadurch gekennzeichnet, dass** die Ladeeinrichtung (3) ein Ladekabel zum Anschließen an die fahrzeugexterne Ladequelle (1) umfasst.

8. Fahrzeug (2) nach einem der vorhergehenden Ansprüche, **dadurch gekennzeichnet, dass** das Herstellen der Ladeverbindung ein Anschließen oder Anstecken der Ladeeinrichtung (3) an die fahrzeugexterne Ladequelle (1) umfasst und/oder das Unterbrechen der Ladeverbindung ein Trennen oder Abziehen der Ladeeinrichtung (3) von der fahrzeugexternen Ladequelle (1) umfasst.

9. Fahrzeug (2) nach einem der vorhergehenden Ansprüche, **dadurch gekennzeichnet, dass** das Fahrzeug ein Personenkraftwagen ist.

10. Fahrzeug (2) nach einem der vorhergehenden Ansprüche, **dadurch gekennzeichnet, dass** das Fahrzeug ein Nutzfahrzeug ist, vorzugsweise ein Omnibus oder ein Lastkraftwagen.

11. Fahrzeug (2) nach einem der vorhergehenden Ansprüche, **dadurch gekennzeichnet, dass** das Fahrzeug ein elektrisch angetriebenes Zweirad ist.
